# EUROPEAN PATENT APPLICATION

(11) **EP 2 719 888 A1**
(43) Date of publication of application: **16.04.2014**
(21) Application number: 13187431.5
(22) Date of filing: 04.10.2013
(51) Int. Cl.: F02N 11/08, H02M 7/68

(54) **Dual-DC bus starter/generator**

(30) Priority: 11.10.2012 US 201213649944
(71) Applicant: Hamilton Sundstrand Corporation, Windsor Locks, CT 06096-1010 (US)
(72) Inventor: Nguyen, Vietson M., Rockford, IL Illinois 61114 (US)
(74) Representative: Hughes, Andrea Michelle

(57) **Abstract**

A system includes a starter/generator 12 that receives AC power in a start mode, and receives AC power in a generate mode; and an inverter/converter circuit 14 that converts the receives AC power from the starter/generator to DC power for a dual-DC bus during the generate mode, and converts DC power to AC power for the starter/generator during the start mode, wherein the inverter/converter circuit denies power flow from the dual-DC bus to the starter/generator during the generate mode.

## Description

### BACKGROUND

The present invention is related to power systems for aircraft, and in particular to a dual-direct-current (DC) bus starter/generator.

Aircraft systems include rotating electric machines which can be used both to generate electrical energy from mechanical energy to provide power to various aircraft systems, as well as to convert electrical energy to mechanical energy to start an engine containing the rotating electric machines. Various starter/generator systems have been implemented in the past such as, for example, switched reluctance systems.

One past starter/generator system involved the use of a three-phase synchronous system to connect three-phase AC output from the generator to a six-switch power inverter. The power switches act as a variable frequency inverter to start the engine in the motoring mode. While in power generating mode, parallel diodes act as a normal rectifier to produce a single DC output voltage.

### SUMMARY

A system includes a starter/generator and an inverter/converter circuit. The starter/generator receives AC power in a start mode, and generates AC power in a generate mode. The inverter/converter circuit converts the generated AC power from the starter/generator to DC power for a dual-DC bus during the generate mode, and converts DC power to AC power for the starter/generator during the start mode. The inverter/converter circuit denies power flow from the dual-DC bus to the starter/generator during the generate mode.

### BRIEF DESCRIPTION OF THE DRAWINGS

FIG. 1 is a circuit diagram illustrating a dual-DC bus starter/generator system according to an embodiment of the present invention.

FIG. 2 is a block diagram illustrating a dual-DC bus starter/generator system according to another embodiment of the present invention.

FIG. 3 is a flowchart illustrating a method for providing AC power to a starter/generator and providing power from the starter/generator to a dual-DC bus according to an embodiment of the present invention.

### DETAILED DESCRIPTION

The present invention describes a system and method for providing a dual-DC bus starter/generator. Many DC loads, such as motor drives, operate more efficiently on dual-DC buses as opposed to the single DC buses of past starter/generator system implementations. The system includes a starter/generator, and an inverter/converter circuit. The starter/generator is any known starter/generator. The inverter/converter circuit includes twelve switches, six diodes, two output capacitors, and a controller. During a start mode of the starter generator, the inverter/converter controller operates the twelve switches to convert DC power from a dual-DC bus to AC power for the starter/generator. During a generate mode, AC power from the starter/generator is converted to DC power on the dual-DC bus through the inverter/converter. The inverter/converter acts as an active rectifier during generate mode. The inverter/converter controller operates six of the twelve switches to provide the active rectification, and disables six of the twelve switches to deny power from the dual-DC bus to the starter/generator during generate mode, which is safer for the engine mechanical systems where the starter/generator is located.

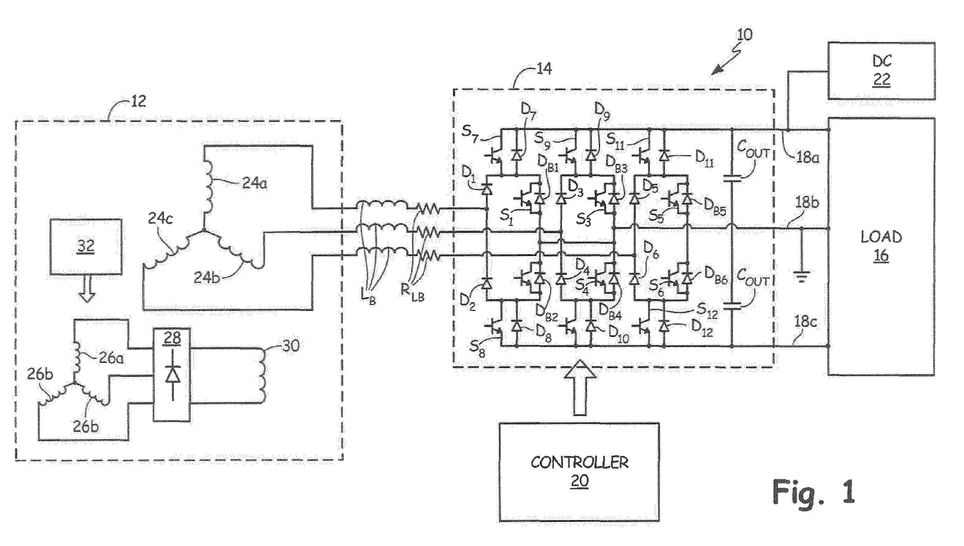

FIG. 1 is a circuit diagram illustrating a dual-DC bus starter/generator system 10 according to an embodiment of the present invention. System 10 includes starter/generator 12, inverter/converter circuit 14, load 16, boost inductors L_{B}, corresponding resistances R_{LB}, dual-DC bus lines 18a-18c, inverter/converter controller 20, and DC power source 22. Inverter/converter 14 acts as an active rectifier in a power generation mode, and as a power inverter in a start mode. Boost inductors L_{B} are needed if the leakage inductances from the main windings of starter/generator 12 are not high enough to act as boost inductors for inverter/converter circuit 14 in power generation mode.

Starter/generator 12 is utilized to provide AC power to various aircraft systems during power generation mode, and is utilized to convert electric energy into mechanical energy to start up an engine that contains starter/generator 12. Starter/generator 12 includes main generator stator windings 24a-24c, rotating exciter windings 26a-26c, rotating rectifier 28, main rotor excitation winding 30, and stator-side exciter windings 32.

In generate mode, mechanical energy from the engine is converted into electrical energy by starter/generator 12. Stator-side exciter windings 32 are provided DC current in order to generate a magnetic field. This magnetic field induces AC current within rotating exciter windings 26a-26c. This AC current is converted to DC current by rotating rectifier 28. This DC current is provided to main rotor excitation winding 30, which induces an AC current in main generator stator windings 24a-24c. This AC current is provided to inverter/converter circuit 12, and may also be provided to any other aircraft systems that require AC power.

In start mode, AC current is provided to both main generator stator windings 24a-24c, along with stator-side exciter windings 32. In this mode, electrical energy is converted to mechanical energy in the rotating components. This mechanical energy is transmitted via shaft to start the engine that contains starter/generator 12.

Inverter/converter circuit 14 acts as an active rectifier during power generation mode, and as a power inverter during start mode. Inverter/converter 14 includes switches S₁-S₁₂, diodes D₁-D₁₂, body diodes D_{B1}-D_{B6}, and output capacitors C_{OUT1} and C_{OUT2}. Switches S₁-S₁₂ are any known power switches such as, for example, insulated gate bipolar transistors (IGBTs) or metal-oxide-semiconductor field-effect transistors (MOSFETs). AC power is provided to inverter/converter circuit 14 from main generator stator windings 24a-24c of starter/generator 12 during power generation mode. This AC power may be tapped between starter/generator 12 and inverter/converter circuit 14 in order to provide AC power to other aircraft systems that require it.

During power generation, inverter/converter controller 20 controls switches S₁-S₆ to provide a dual-DC output voltage on dual-DC bus lines 18a-18c. Line 18a provides a positive DC voltage such as, for example, 270 volts to load 16. Line 18c provides a negative DC voltage such as, for example, -270 volts to load 16. Line 18b is a neutral line. During generation mode, switches S₇-S₁₂ are disabled by controller 20. This allows only a unidirectional flow of power from starter/generator 12 to dual-DC bus lines 18a-18c. Denying power from dual-DC bus lines 18a-18c to starter/generator 12 during generation mode helps prevent any mechanical damage to the engine rotor shaft of the engine that includes starter/generator 12. Load 16 is any load that requires DC power for operation such as, for example, a motor drive. Load 16 may be configured to accept a single DC input voltage, by connecting to outputs 18a and 18c, or may be configured to accept a dual-DC input voltage, connecting to all inputs 18a-18c, if the load needs to be connected through a three-level power inverter.

Controller 20 controls switches S₁-S₆ to control the output on dual-DC bus lines 18a-18c. Controller 20 is any controller capable of operating the switches, such as, for example, a digital logic controller. The magnitude of DC power on bus lines 20a and 20c may be regulated by controller 20 using, for example, pulse-width modulation (PWM). This can be used in conjunction with traditional DC bus regulation, such as using an excitation controller to control the magnitude of the AC power generated by starter/generator 12. Controlling the output using controller 20 is advantageous in that it is only limited by the amount of time it takes to run a control algorithm on controller 20.

During the start mode, inverter/converter 14 acts as a power inverter. DC power is provided on dual-DC bus lines 18a-18c to inverter/converter 14 from DC power source 22. DC power source 22 is any source of DC power such as, for example, a battery or a storage capacitor. During start mode, switches S₇-S₁₂ are utilized in conjunction with switches S₁-S₆ to convert the DC power on dual-DC bus lines 18a-18c into three-phase AC power for generator 12. The AC power is provided to main generator stator windings 24a-24c, and may also be provided to stator-side exciter windings 32. If stator-side exciter windings 32 need a to be powered by another AC source running at different amplitude and frequency than those of main generator stator windings 24a-24c, a second but smaller DC to AC inverter may be utilized. The magnitude of the AC power provided to starter/generator 12 may be controlled using controller 20. Once the rotor speed of the engine that includes starter/generator 12 has reached a desired starting speed, system 10 transitions to generate mode, and switches S₇-S₁₂ are disabled by controller 20. Monitoring of the rotor speed and control of the operating mode may be accomplished using any known method and may be implemented in controller 20, or any other controller such as, for example, an excitation controller implemented in starter/generator 12 and connected to communicate the operating mode to controller 20.

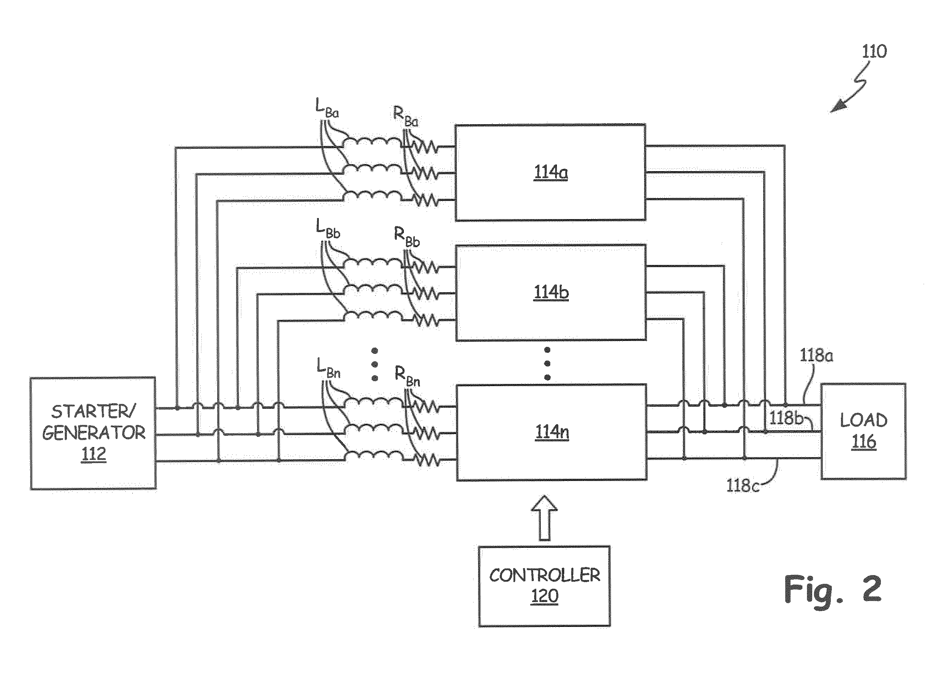

FIG. 2 is a block diagram illustrating a dual-DC bus starter/generator system 110 according to another embodiment of the present invention. System 110 includes starter/generator 112, boost inductors L_{Ba}-L_{Bn}, corresponding resistances R_{LBa}-R_{LBn}, inverter/converter circuits 114a-114n, load 116, dual-DC bus lines 118a-118c, and inverter/converter controller 120. Starter/generator 112 corresponds to starter/generator 12 of FIG. 1.

Inverter/converter circuits 114a-114n are inverter/converter circuits that correspond to inverter/converter circuit 14 of FIG. 1. These circuits are connected in parallel to provide better performance for electromagnetic interference (EMI) and ripple protection. As many circuits may be connected in parallel as is desired. The same inverter/converter controller 120 may be used to control each inverter/converter circuit 114a-114n. In another embodiment, because the power necessary during startup may not be as high as the power used during power generation, only one circuit 114a needs to contain twelve switches such that the circuit may be used as an inverter during startup mode. The other circuits 114b-114n may include only switches S₁-S₆ to act as a six-switch active rectifier, as switches S₇-S₁₂ are not required.

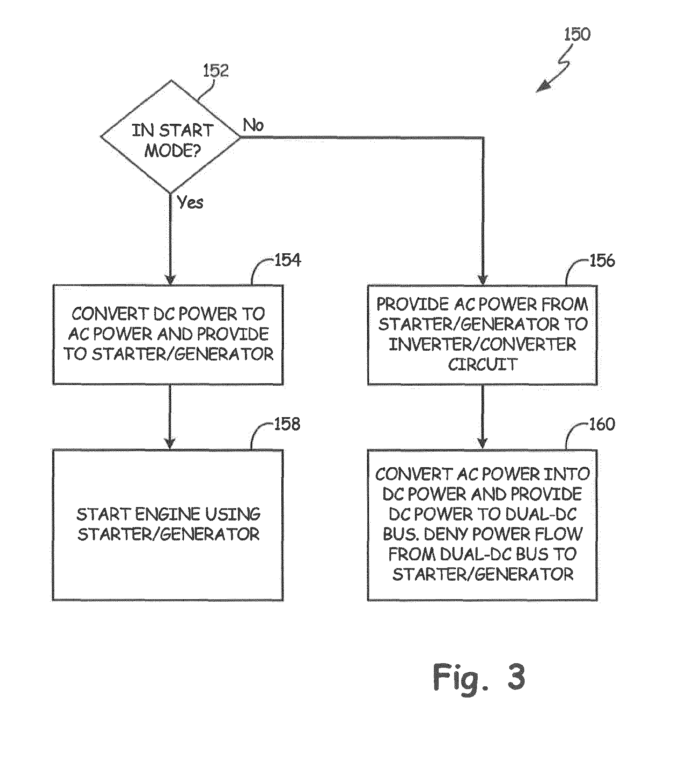

FIG. 3 is a flowchart illustrating method 150 for starting an engine and providing power from the generator of the engine according to an embodiment of the present invention. At step 152, it is determined if the system is operating in start mode or power generation mode. If the system is in start mode, method 150 proceeds to step 154. If the method is in power generation mode, the method proceeds to step 156. At step 154, DC power is converted from DC power source 22 to AC power for starter/generator 12 using inverter/converter circuit 14. At step 158, an engine containing starter/generator 12 is started using mechanical energy converted from the AC power provided from inverter/converter circuit 14 using starter/generator 12. At step 156, starter/generator 12 provides AC power to inverter/converter circuit 14. At step 160, the provided AC power is converted to DC power on dual-DC bus lines 18a-18c using inverter/converter circuit 14. During step 160, switches S₇-S₁₂ are disabled to deny power flow from dual-DC bus lines 18a-18c back to starter/generator 12.

The following are non-exclusive descriptions of possible embodiments of the present invention.

A system according to an exemplary embodiment of this disclosure, among other possible things, includes: a starter/generator that receives AC power in a start mode, and generates AC power in a generate mode, and an inverter/converter circuit that converts the generated AC power from the starter/generator to DC power for a dual-DC bus during the generate mode, and converts DC power to AC power for the starter/generator during the start mode, wherein the inverter/converter circuit denies power flow from the dual-DC bus to the starter/generator during the generate mode.

The system of the preceding paragraph can optionally include, additionally and/or alternatively, any one or more of the following features, configurations and/or additional components.

The at least one inverter/converter circuit can comprise a first power switch operated to convert the generated AC power from the starter/generator into DC power, and convert DC power into AC power for the starter/generator, and a second power switch disabled to deny power flow from the dual-DC bus to the starter/generator.

The first power switch and the second power switch are operated by a controller.

The generated AC power from the starter/generator is three-phase AC power.

The dual-DC bus is connected to provide power to a motor drive.

An inverter/converter circuit connected between a starter/generator and a dual-DC bus according to an exemplary embodiment of this disclosure, among other possible things includes: at least one first power switch that converts AC power from the starter/generator into DC power for the dual-DC bus in a generate mode, and converts DC power to AC power for the starter/generator in a start mode, and at least one second power switch disabled to deny power flow from the dual-DC bus to the starter/generator in the generate mode, and enabled to allow power flow from the dual-DC bus to the starter/generator in the start mode.

The inverter/converter circuit of the preceding paragraph can optionally include, additionally and/or alternatively, any one or more of the following features, configurations and/or additional components.

A controller that controls the at least one first power switch and the at least one second power switch.

The AC power from the starter/generator is three-phase AC power.

The dual-DC bus is provides power to a motor drive.

The at least one first power switch comprises six first power switches, and the at least one second power switch comprises six second power switches.

A method according to an exemplary embodiment of this disclosure, among other possible things includes: converting startup direct current (DC) power to startup alternating current (AC) power using an inverter/converter circuit during a start mode, providing the startup AC to a starter/generator during the start mode, providing generated AC power from the starter/generator to the inverter/converter circuit in a generate mode, converting the generated AC power from the starter/generator into DC power on a dual-DC bus using the inverter/converter circuit during the generate mode, and denying power flow from the dual-DC bus to the starter/generator using the inverter/converter circuit in the generate mode.

The method of the preceding paragraph can optionally include, additionally and/or alternatively, any one or more of the following features, configurations and/or additional components.

Converting startup DC power to startup AC power can comprise using at least one first power switch of the inverter/converter circuit.

Converting the generated AC power from the starter/generator into DC power can comprise using the at least one first power switch.

Denying power flow from the dual-DC bus to the starter/generator can comprise using at least one second power switch of the inverter/converter.

The at least one first power switch and the at least one second power switch can be controlled by a controller.

The inverter/converter circuit can comprise a plurality of inverter/converter circuits connected in parallel.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A system comprising:
a starter/generator (12) that receives AC power in a start mode, and generates AC power in a generate mode; and
an inverter/converter circuit (14) that converts the generated AC power from the starter/generator to DC power for a dual-DC bus during the generate mode, and converts DC power to AC power for the starter/generator during the start mode, wherein the inverter/converter circuit denies power flow from the dual-DC bus to the starter/generator during the generate mode.

2. The system of claim 1, wherein the at least one inverter/converter circuit comprises:
a first power switch operated to convert the generated AC power from the starter/generator into DC power, and convert DC power into AC power for the starter/generator; and
a second power switch disabled to deny power flow from the dual-DC bus to the starter/generator.

3. The system of claim 2, wherein the first power switch and the second power switch are operated by a controller.

4. The system of claim 1, wherein the generated AC power from the starter/generator is three-phase AC power.

5. The system of claim 1, wherein the dual-DC bus is connected to provide power to a motor drive.

6. An inverter/converter circuit connected between a starter/generator and a dual-DC bus, the inverter/converter circuit comprising:
at least one first power switch (S₁) that converts AC power from the starter/generator into DC power for the dual-DC bus in a generate mode, and converts DC power to AC power for the starter/generator in a start mode; and
at least one second power switch (S₂) disabled to deny power flow from the dual-DC bus to the starter/generator in the generate mode, and enabled to allow power flow from the dual-DC bus to the starter/generator in the start mode.

7. The inverter/converter circuit of claim 6, further comprising a controller (20) that controls the at least one first power switch and the at least one second power switch.

8. The inverter/converter circuit of claim 6, wherein the dual-DC bus provides power to a motor drive.

9. The inverter/converter circuit of claim 6, wherein the at least one first power switch comprises six first power switches, and wherein the at least one second power switch comprises six second power switches.

10. A method comprising:
converting startup direct current (DC) power to startup alternating current (AC) power using an inverter/converter circuit during a start mode;
providing the startup AC to a starter/generator during the start mode;
providing generated AC power from the starter/generator to the inverter/converter circuit in a generate mode;
converting the generated AC power from the starter/generator into DC power on a dual-DC bus using the inverter/converter circuit during the generate mode; and
denying power flow from the dual-DC bus to the starter/generator using the inverter/converter circuit in the generate mode.

11. The method of claim 10, wherein the converting of startup DC power to startup AC power comprises using at least one first power switch of the inverter/converter circuit.

12. The method of claim 10, wherein the converting of the generated AC power from the starter/generator into DC power comprises using the at least one first power switch.

13. The method of claim 12, wherein the denying of power flow from the dual-DC bus to the starter/generator comprises using at least one second power switch of the inverter/converter.

14. The method of claim 12, further comprising controlling the at least one first power switch and the at least one second power switch with a controller.

15. The method of claim 10, wherein the inverter/converter circuit comprises a plurality of inverter/converter circuits connected in parallel.
